# EUROPÄISCHE PATENTSCHRIFT

(11) **EP 0 799 332 B1**
(45) Veröffentlichungstag und Bekanntmachung des Hinweises auf die Patenterteilung: **14.11.2001**
(21) Anmeldenummer: 95942049.8
(22) Anmeldetag: 22.12.1995
(51) Int. Cl.: D01F 2/00, C08J 5/18, D01D 5/24

(54) **VERFAHREN ZUR HERSTELLUNG VON CELLULOSISCHEN FORMKÖRPERN SOWIE CELLULOSISCHE FORMKÖRPER**
CELLULOSIC MOLDING PROCESS AND CELLULOSIC MOLDINGS
PROCEDE DE PRODUCTION DE CORPS MOULES CELLULOSIQUES ET CORPS MOULES CELLULOSIQUES OBTENUS A L'AIDE DUDIT PROCEDE

(30) Priorität: 23.12.1994 DE 4446491; 10.02.1995 DE 19504449
(43) Veröffentlichungstag der Anmeldung: 08.10.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: WEIGEL, Peter, D-14532 Kleinmachnow (DE); FINK, Hans-Peter, D-14513 Teltow (DE); PURZ, Hans, Joachim, D-14513 Teltow (DE); FRIGGE, Konrad, D-14478 Potsdam (DE); WACHSMANN, Ulrich, D-63820 Elsenfeld (DE); NYWLT, Martin, D-63785 Obernburg (DE)
(86) Internationale Anmeldenummer: DE9501864
(87) Internationale Veröffentlichungsnummer: WO9620301

(56) Entgegenhaltungen:
- DD-A- 134 448
- FIBRE CHEMISTRY, Bd. 20, Nr. 1, September 1988 Seiten 38-39, V V ROMANOV ET AL 'MORPHOLOGICAL FEATURES OF THE STRUCTURE OF FIBRES PREPARED FROM SOLUTIONS OF CELLULOSE IN METHYLMORPHOLINE OXIDE'

## Beschreibung

Die Erfindung betrifft ein Verfahren zur Herstellung von cellulosischen Formkörpern, in dem eine Lösung enthaltend in Aminoxiden gelöste Cellulose in einer Düse geformt wird und die geformte Lösung nach einer Luftstrecke in ein Fällmedium geführt wird. Die Erfindung betrifft weiterhin einen cellulosischen Formkörper, hergestellt durch Formen einer Lösung enthaltend in Aminoxiden gelöste Cellulose.

Unter cellulosischen Formkörpern sind im Rahmen der vorliegenden Erfindung insbesondere Fasern zu verstehen, wie Fasern endlicher Länge, beispielsweise Stapelfasern, aber auch Endlosfilamente, die in der Regel zu Garnen zusammengefaßt sind. Unter cellulosischen Formkörpern sind aber auch Filme und Membranen zu verstehen, wobei letztere in Form von Flachmembranen und Hohlfasermembranen zum Stoff- und/oder Wärmeaustausch, beispielsweise in der Dialyse oder der Oxygenation, eingesetzt werden.

Wegen hoher Investitionskosten und insbesondere wegen der hohen Umweltbelastung besteht ein erhebliches Interesse daran, Alternativen zum Viskoseverfahren, nach dem gegenwärtig der überwiegende Teil der Celluloseregeneratfasern hergestellt wird, zu finden. Zu den aussichtsreichsten Verfahren gehört das Verspinnen von Lösungen der Cellulose in Aminoxiden, vorzugsweise in N-Methyl-Morpholin-N-Oxid (NMMNO), nicht zuletzt deshalb, weil damit der umständliche Weg über eine Derivatisierung der Cellulose vermieden wird. Es ist bekannt, daß Cellulose in einem NMMNO-Wasser-System löslich ist und durch Spinnen in eine meist wäßrige NMMNO-Lösung zu textilen Fasern verarbeitet werden kann (DE 28 30 685, DD 142 898, EP 0 490 870).

Für die nach dem NMMNO-Verfahren erzeugten Fasern sind im Vergleich zu Viskosefasern hohe Festigkeiten und Moduli kennzeichnend. So liegen die Reißfestigkeiten im allgemeinen in einem ungefähren Bereich von ca. 20 bis 50 cN/tex und die Anfangsmoduli in einem Bereich über ca. 1.500 cN/tex. Das bedeutet, daß die Festigkeiten erfreulich hoch, aber oft höher als erforderlich und die Moduli deutlich zu hoch für einige Anwendungen im Bereich textiler Fasern mit guten textilen Gebrauchseigenschaften liegen, in dem z.B. die üblichen, für den textilen Gebrauch in der Bekleidung bewährten Viskosefasern mit Anfangsmoduli deutlich unter 1.500 cN/tex eingesetzt werden.

Obwohl das NMMNO-Verfahren bereits großtechnisch angewandt wird, und die damit erzeugten Fasern sich für einige textile Anwendungen als erfolgreich erwiesen haben, zeigen letztere eine Reihe von Unterschieden gegenüber den nach dem Viskoseverfahren hergestellten Fasern und sind daher im textilen Bereich nicht in üblicher Weise einsetzbar. Sie zeigen u.a. Sprödigkeit und Fibrillierneigung im nassen Zustand. Auch können die erreichten Werte für die Bruchdehnung nicht befriedigen. Als nachteilig erweist sich auch, daß die Variationsbreite der textilphysikalischen Kennwerte bei Änderung der Herstellungsbedingungen gering ist.

Eine Möglichkeit der Beeinflussung von Festigkeit und Modul der Fasern zeigten Chanzy u.a. (Polymer 31 (1990), 400 - 405) durch Hinzufügen von anorganischen Salzen, wie z.B. Ammoniumchlorid oder Calciumchlorid zur NMMNO-Spinnlösung der Cellulose auf. Damit wird aber eine deutliche Erhöhung von Festigkeit und Modul erreicht. Die Fasern neigen deshalb noch stärker zur Sprödigkeit und Fibrillierung. Derartige Fasern, die das typische Verhalten hochfester, hochmoduliger Fasern zeigen, sind zwar für viele technische Zwecke, insbesondere in Form von Verbunden in fester Matrix, hervorragend geeignet, im textilen Bereich jedoch nicht in üblicher Breite einsetzbar.

Eine Möglichkeit, den Modul in begrenztem Maße herabzusetzen und damit die Sprödigkeit der Fasern zu verringern, besteht darin, anstelle des meist eingesetzten Fällbades aus einer wäßrigen NMMNO-Lösung eine Lösung von NMMNO in Isopropanol bzw. Amylalkohol zu verwenden (SU 1 224 362) oder sowohl der Spinnlösung als auch dem Fällbad bestimmte hydrophile Additive hinzuzusetzen. Die dabei eintretende geringfügige Herabsetzung der Festigkeit kann toleriert werden, da die Fasern noch immer Festigkeiten aufweisen, die denen von Viskosefasern entsprechen. Insgesamt gesehen, lassen diese Verfahren jedoch immer noch Wünsche offen, sowohl hinsichtlich der Splittrigkeit der Fasern als auch hinsichtlich der Möglichkeit, die textilphysikalischen Kennwerte der Fasern durch Änderung der Herstellungsbedingungen zu steuern.

Die besonderen Eigenschaften der nach dem Aminoxidprozeß hergestellten Fasern sind durch strukturelle Besonderheiten gekennzeichnet, wobei eine gegenüber textilen Viskosefasern kompaktere Fällungsstruktur mit erhöhter Kristallinität und Kettenorientierung sowie veränderter Kristallitform festzustellen ist (J. Schurz u.a., Lenzinger Berichte 9/94, S. 37, H.-P. Fink u.a., Proceedings of the Akzo-Nobel Viscose Chemistry Seminar "Challenges in Cellulosic Man-made Fibres", Stockholm 1994). Die oben genannten Möglichkeiten der Veränderung von Modul und Sprödigkeit lassen sich dabei auf entsprechend veränderte Faserstrukturen zurückführen (M. Dubé, R.H. Blackwell, TAPPI Proceedings 1983 "International Dissolving and Specialty Pulps", S. 111, P. Weigel u.a., Lenzinger Berichte 9/94, S. 31). Zu berücksichtigen ist dabei weiterhin, daß die im Herstellungsprozeß eingestellte Hohlraumstruktur des Fadens dessen Färbeverhalten mitbestimmt.

Zusammenfassend ist somit festzustellen, daß es nach wie vor ein zentrales Problem ist, flexible Cellulosefasern mit geringer Sprödigkeit und Splittrigkeit herzustellen und den Spinnprozeß so zu beeinflussen, daß damit Fasern, die den gesamten Einsatzbereich textiler Viskosefasern abdecken, hergestellt werden können.

Aufgabe der vorliegenden Erfindung ist daher, ein Verfahren zur Herstellung von cellulosischen Formkörpern zur Verfügung zu stellen, mit dem es möglich ist, die Eigenschaften der Formkörper gezielt zu verbessern. Eine weitere Aufgabe besteht darin, neue cellulosische Formkörper vorzuschlagen, insbesondere sollen cellulosische Fasern zur Verfügung gestellt werden, die eine geringe Sprödigkeit und Splittrigkeit, d.h. eine reduzierte Fibrillierungsneigung gegenüber den bekannten Fasern aufweisen.

Die Aufgabe wird in bezug auf das Verfahren durch die Merkmale des Anspruchs 1 und in bezug auf den cellulosischen Formkörper durch die Merkmale des Anspruchs 11 gelöst. Die Unteransprüche zeigen vorteilhafte Weiterbildungen auf.

Das erfindungsgemäße Verfahren zur Herstellung cellulosischer Formkörper (Anspruch 1) zeichnet sich dadurch aus, daß eine Lösung enthaltend in Aminoxiden gelöste Cellulose in einer Düse geformt wird und die geformte Lösung nach einer Luftstrecke nacheinander durch mindestens zwei Fällmedien geführt wird. Wesentlich ist dabei, daß die Fällmedien so ausgewählt werden, daß zumindest im ersten Fällmedium eine langsamere Koagulation der Cellulose gegenüber dem letzten Fällmedium erfolgt. Dadurch ist es nun überraschenderweise möglich, daß cellulosische Formkörper hergestellt werden können, die - auf ihren Querschnitt bezogen - einen inneren Bereich mit höherer Festigkeit und höherem Anfangsmodul aufweisen als ein den inneren Bereich umgebender äußerer Bereich. Der innere Bereich zeichnet sich durch eine hohe übermolekulare Ordnung in Form von kleinen, feindispersen Poren aus, während der äußere Bereich eine geringe übermolekulare Ordnung mit gegenüber dem inneren Bereich größeren heterogenen Hohlräumen aufweist. Bei cellulosischen Fasern wird damit eine Kern-Mantel-Struktur erreicht, wobei das Innere der Faser (Kern) aus gut geordneten hochfesten und hochmoduligen Bereichen besteht, während die äußere Hülle der Faser (Mantel) aus wenig geordneten flexiblen Anteilen mit relativ geringer Festigkeit und geringem Modul besteht. Dadurch steht nun eine Faser zur Verfügung, deren hochfester Kern die gewünschten Grundeigenschaften gewährleistet, während der flexible Mantel das Aufsplittern der Fasern verhindert und für gute Flexibilität und geringe Bruchneigung sorgt. Entscheidend bei dem vorgeschlagenen Verfahren zum Herstellen cellulosischer Formkörper ist, daß die Lösung nach Austritt aus der Düse nacheinander durch mehrere, vorzugsweise durch zwei, Fällmedien, die die Löslichkeit der Cellulose in Aminoxid in unterschiedlicher Weise herabsetzen, geführt wird. Dabei ist die Verweildauer im ersten Fällmedium so kurz, daß nur eine äußere Schicht des in Entstehung begriffenen Formkörpers koaguliert, während das Innere erst im zweiten bzw. in den folgenden Fällmedien koaguliert. Das unterschiedliche Einwirken der Fällmedien auf das Löseverhalten des NMMNO gegenüber Cellulose bewirkt, daß über den Querschnitt unterschiedliche Cellulosestrukturen mit unterschiedlichen mechanischen Kennwerten entstehen. Dies führt bei Fasern erfindungsgemäß zu solchen mit reduzierter Fibrillierneigung. Erfindungsgemäß erhält man Fasern mit festem Kern und flexibler Hülle, wenn das erste Fällmedium ein wesentlich langsameres Koagulieren der in NMMNO gelösten Cellulose bewirkt als die nachfolgenden Fällmedien.

Bevorzugt wird beim erfindungsgemäßen Verfahren dabei so vorgegangen, daß eine Lösung, enthaltend in Aminoxid gelöste Cellulose in an und für sich bekannten Konzentrationen, eingesetzt wird. Im allgemeinen wird hierbei mit einer 5 bis 20%igen Aminoxidlösung gearbeitet. Bevorzugt wird eine 7,5 bis 15%ige Lösung verwendet. Vorzugsweise wird mit N-Methyl-Morpholin-N-Oxid (NMMNO) als Aminoxid gearbeitet.

Als Fällmedien mit gegenüber zumindest dem letzten Fällungsbad verlangsamter Koagulation sind grundsätzlich alle aminoxidlösenden Substanzen geeignet, gegebenenfalls auch als Mischungen und mit weiteren Zusätzen. Relativ langsam wirkende Fällmittel für die in Aminoxid gelöste Cellulose und damit für das erste Fällmedium geeignet, sind insbesondere Alkohole sowie Alkanole als auch höherwertige, vorzugsweise aliphatische Alkohole, Ketone, Carbonsäuren, Amine und andere Stickstoffverbindungen, Elektrolytlösungen sowie Mischungen aus diesen vorstehend genannten Verbindungen. Bevorzugt sind jedoch Alkanole, wie Butanol, Pentanol, Hexanol und weitere höhermolekulare Alkohole oder deren Mischungen. Für das letzte Fällmedium, das wesentlich die Struktur im Inneren des Formkörpers bestimmt, wird vorzugsweise Wasser bzw. eine wäßrige Aminoxidlösung verwendet.

Das Verfahren ist grundsätzlich mit mehreren der vorstehend beschriebenen Fällmedien durchführbar, wobei jedoch immer vorausgesetzt ist, daß zumindest die ersten Fällmedien gegenüber dem letzten Fällmedium eine verlangsamte Koagulation aufweisen, so daß die vorstehend beschriebenen Formkörper resultieren.

In Versuchen hat es sich gezeigt, daß es ausreichend ist, wenn mit zwei Fällmedien gearbeitet wird.

Ist die Dichte des Lösungsmittels des ersten Fällmediums niedriger als die Dichte des zweiten Fällmediums und sind beide Fällmedien nicht oder nur sehr wenig miteinander mischbar, so kann erfindungsgemäß so vorgegangen werden, daß beide Fällmedien in einem Behälter übereinandergeschichtet werden. Dies gilt z.B. für Alkanole mit wachsendem Molekulargewicht ab Hexanol oder einer Mischung derselben als erstes Fällmedium und Wasser bzw. einer wäßrigen Aminoxidlösung als zweites Fällmedium. Auf diese Weise kann die Verweildauer im ersten Fällmedium sehr einfach durch die Abzugsgeschwindigkeit und die Schichtdicke des oberen Fällmediums eingestellt werden. Erfindungsgemäß kann somit durch die Wahl des Lösungsmittels im ersten Fällmedium die Struktur des äußeren Teils des Formkörpers und durch das Lösungsmittel im letzten Fällmedium die Struktur des inneren Bereichs beeinflußt werden, während die Dicke des äußeren Bereichs durch die Verweilzeit im ersten Fällmedium bestimmt ist. Dies ermöglicht eine weitgehende Variation der physikalischen Eigenschaften von mittels des Aminoxidverfahrens hergestellten cellulosischen Formkörpern.

Die Erfindung betrifft weiterhin Cellulosefasern mit einer Kern-Mantel-Struktur (Anspruch 14). Diese Fasern sind dadurch ausgezeichnet, daß die Struktur der Cellulose in der Nähe der Faseroberfläche (Mantel) sich von der Struktur im Inneren der Faser (Kern) unterscheidet und die Fasern somit eine reduzierte Fibrillierneigung aufweisen. Die erfindungsgemäßen Fasern weisen im Kernbereich eine wesentlich höher geordnete Struktur als im Mantelbereich auf. Dies führt dazu, daß die Cellulosebereiche im Kern der Fasern eine hohe Festigkeit und einen hohen Anfangsmodul aufweisen, während die Mantelbereiche bei geringerer Festigkeit und geringerem Anfangsmodul eine hohe Flexibilität und geringe Sprödigkeit besitzen. Der hochfeste Kern der Faser gewährleistet somit eine hohe Festigkeit, während der flexible Mantel die Bruchneigung und Sprödigkeit der Fasern erniedrigt und für gute Flexibilität sorgt. Die erfindungsgemäßen Fasern weisen dabei eine Reißfestigkeit im trokkenen Zustand von 15 bis 50 cN/tex und im nassen Zustand von 10 bis 30 cN/tex auf. Der Anfangsmodul liegt im Bereich von 1.000 bis 2.500 cN/tex (trocken) bzw. 60 bis 300 cN/tex (naß). Die Beständigkeit im Wasserstrahl bei Vorbelastung in Höhe von 80% der Naßreißfestigkeit ist größer als 6.000 s.

Diese Cellulosefasern können bevorzugt mit einem vorstehend beschriebenen Verfahren hergestellt werden.

Das erfindungsgemäße Verfahren ist auch besonders vorteilhaft zur Herstellung von Membranen, insbesondere von Hohlfasermembranen geeignet. Bei der Herstellung von Hohlfasern wird eine Hohlfaserspinndüse eingesetzt, durch die die Spinnlösung und ein inertes Fluid zur Ausbildung des inneren Hohlraumes extrudiert werden.

Erfindungsgemäße Hohlfasern zeichnen sich dadurch aus, daß ihre Wand Bereiche mit unterschiedlicher Festigkeit und unterschiedlichem Anfangsmodul aufweist. Der innere Bereich der Wand weist eine hohe übermolekulare Ordnung in Form von kleinen, feindispersen Poren auf. Der äußere Wandbereich weist eine geringe übermolekulare Ordnung mit gegenüber dem inneren Bereich größeren heterogenen Hohlräumen auf.

Der äußere Wandbereich der erfindungsgemäßen Hohlfasern übernimmt eine stützende Funktion und dessen größere Poren bewirken einen guten Durchsatz. Die eigentliche Trennwirkung wird von dem inneren, feinporigen Bereich übernommen. Eine derartige Membran gewährleistet in vorteilhafter Weise eine Steigerung der Permeabilität ohne Verlust der eigentlichen Trennwirkung.

Auch erfindungsgemäße Flachmembranen bieten diesen Vorteil. Bei diesen ist der Bereich mit feindispersen Poren nicht ringförmig, sondern eben ausgebildet und ist außen von ebenfalls ebenen Bereichen mit größeren heterogenen Hohlräumen umgeben, die die Funktion einer Stützschicht haben. Auch hier wird die Trennung durch den feinporigen Bereich bewirkt, und aufgrund dessen vergleichsweise geringen Dicke resultiert eine hohe Permeabilitätsrate der Membran.

Weitere Einzelheiten und Merkmale der Erfindung ergeben sich aus der nachfolgenden Schilderung der Ausführungsbeipiele sowie anhand der Figuren. Es zeigen:
- Fig. 1: eine elektronenmikroskopische (TEM) Aufnahme des Faserquerschnitts (Ausschnitt) einer in Wasser gefällten Cellulosefaser aus Aminoxidlösung;
- Fig. 2: eine TEM-Aufnahme des Faserquerschnitts (Ausschnitt) einer in Hexanol gefällten Cellulosefaser aus Aminoxidlösung, und
- Fig. 3: eine TEM-Aufnahme des Faserquerschnitts (Ausschnitt) einer in Hexanol/Wasser gefällten Cellulosefaser aus Aminoxidlösung.
- Fig. 4: eine TEM-Aufnahme bei 32.500-facher Vergrößerung des Querschnittes im Außenwandbereich einer in Hexanol/Wasser gefällten Cellulosehohlfaser aus Aminoxidlösung.

### Beispiel 1

### (1. Vergleichsbeispiel nach dem Stand der Technik)

Eine Spinnlösung von 9% Cellulose in NMMNO-Monohydrat mit 0,1 Masse-% bezogen auf Cellulose Propylgallat als Stabilisierungsmittel wurde in einem Laborextruder mit einer 60-Loch-Düse bei einer Temperatur von 90°C versponnen, wobei als Fällmedium eine 10%-ige Lösung von NMMNO in Wasser verwendet wurde. Die Faser besitzt die folgenden Parameter:

| | | |
|---|---|---|
| Titer: | | 11,8 tex |
| Reißfestigkeit, | trocken | 33,9 cN/tex |
| | naß | 24,3 cN/tex |
| Reißdehnung, | trocken | 8,7 %, |
| | naß | 10,4 % |
| Anfangsmodul, | trocken | 2078 cN/tex |
| | naß | 308 cN/tex |

Beständigkeit im Wasserstrahl bei Vorbelastung in Höhe von 80% der Naßreißkraft: 55 s

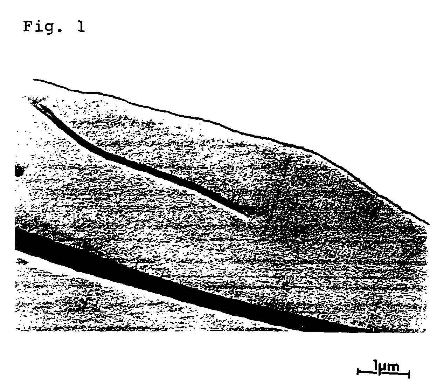

Die TEM-Aufnahme des Faserquerschnitts (Figur 1) zeigt eine Fällungsstruktur mit hoher übermolekularer Ordnung und feindispers verteilten Poren.

### Beispiel 2

### (2. Vergleichsbeispiel nach dem Stand der Technik)

Wie Beispiel 1, wobei als Fällmedium Hexanol verwendet wurde.

| | | |
|---|---|---|
| Titer: | | 13,7 tex |
| Reißfestigkeit, | trocken | 11,7 cN/tex |
| | naß | 3,2 cN/tex |
| Reißdehnung, | trocken | 8,5 % |
| | naß | 32,6 % |
| Anfangsmodul, | trocken | 800 cN/tex |
| | naß | 45 cN/tex |

Beständigkeit im Wasserstrahl bei Vorbelastung in Höhe von 80% der Naßreißkraft: 8350 s

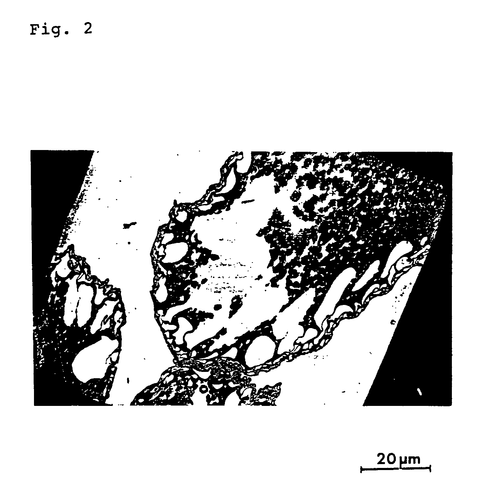

Die TEM-Aufnahme des Faserquerschnitts (Figur 2) zeigt eine Fällungsstruktur mit geringer übermolekularer Ordnung und großen heterogenen Hohlräumen.

### Beispiel 3

Wie Beispiel 1, wobei als Fällmedium eine 10%-ige Lösung von NMMNO in Wasser, über der eine 100 mm dicke Schicht von Hexanol angeordnet war, verwendet wurde.

| | | |
|---|---|---|
| Titer: | | 12,4 tex |
| Reißfestigkeit, | trocken | 24,3 cN/tex |
| | naß | 13,2 cN/tex |
| Reißdehnung, | trocken | 12,5 % |
| | naß | 40,1 % |
| Anfangsmodul, | trocken | 1530 cN/tex |
| | naß | 120 cN/tex |

Beständigkeit im Wasserstrahl bei Vorbelastung in Höhe von 80 % der Naßreißkraft: 8140 s

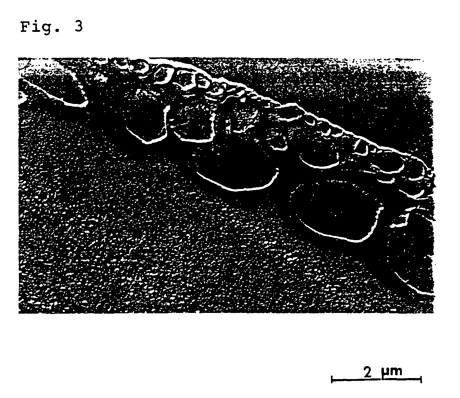

Die TEM-Aufnahme des Faserquerschnitts (Figur 3) zeigt eine Kern-Mantel-Struktur: im Randbereich 2 geringe übermolekulare Ordnung mit großen heterogenen Hohlräumen und im Kern 1 hohe übermolekulare Ordnung mit kleinen feindispers verteilten Poren.

### Beispiel 4

Wie Beispiel 3, wobei anstelle von Hexanol in der oberen Schicht des Fällmediums eine Mischung aus 90% Hexanol und 10% Isopropanol verwendet wurde.

| | | |
|---|---|---|
| Titer: | | 11,8 tex |
| Reißfestigkeit, | trocken | 26,4 cN/tex |
| | naß | 15,3 cN/tex |
| Reißdehnung, | trocken | 14,8 % |
| | naß | 45,3 % |
| Anfangsmodul, | trocken | 1410 cN/tex |
| | naß | 95 cN/tex |

Beständigkeit im Wasserstrahl bei Vorbelastung in Höhe von 80 % der Naßreißkraft: 6320 s.

### Beispiel 5

### (Vergleichsbeispiel)

Eine Spinnlösung von 12% Cellulose in ca. 76% NMMNO und 12% Wasser mit 0,1 Masse%, bezogen auf Cellulose Propylgallat als Stabilisator, wurde bei einer Düsentemperatur von 120 °C zu einer Hohlfaser versponnen, wobei als Fällmedium Wasser eingesetzt wurde. Nach dem Waschen wurden die Hohlfasern mit einer Avivage aus 20% Glycerin und 80% Wasser behandelt und anschließend getrocknet. Die Hohlfaser weist eine Ultrafiltrationsrate für Wasser von 12 ml/m²h Torr auf.

### Beispiel 6

Hohlfasern wurden - wie unter Beispiel 4 ausgeführt - hergestellt, wobei allerdings als Fällmedium Wasser, über dem eine 24 mm dicke Schicht von Hexanol angeordnet war, verwendet wurde. Die erfindungsgemäß hergestellte Hohlfaser weist eine Ultrafiltrationsrate für Wasser von 20 ml/m²h Torr auf.

### Beispiel 7

Wie Beispiel 6, wobei als Fällmedium Wasser, über dem eine 60 mm dicke Schicht Hexanol angeordnet war, verwendet wurde. Die erfindungsgemäß hergestellte Hohlfaser weist eine Ultrafiltrationsrate für Wasser von 22 ml/m²h Torr auf.

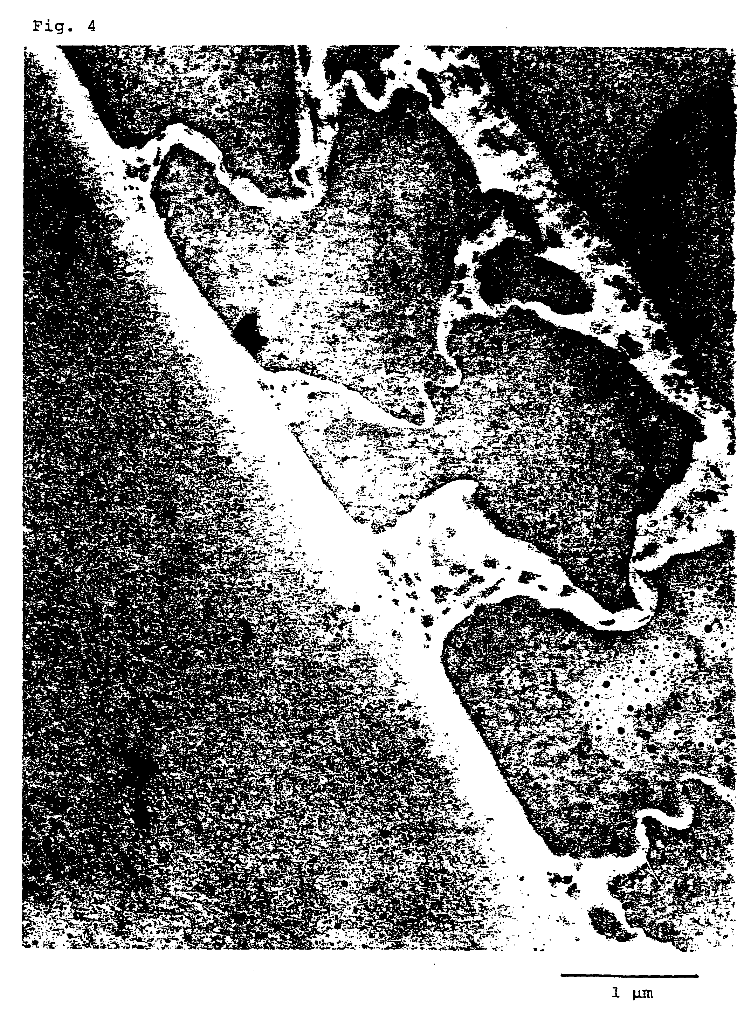

Die TEM-Aufnahme des Querschnittes (Figur 4) zeigt von der Innenwand her nach außen eine gleichmäßige kompakte Porenstruktur. Im Bereich der letzten drei Mikrometer an der Außenwand findet man ein System sehr großer Poren, das nach außen hin mit einer Haut abgeschlossen ist.

Diese Beispiele zeigen, daß die erfindungsgemäß hergestellten Hohlfasern (Beispiele 6 und 7) eine deutlich erhöhte Flußrate für Wasser im Vergleich zu einer Hohlfaser aufweisen, bei deren Herstellung nur Wasser als Fällmedium (Beispiel 5) eingesetzt wurde. Die erfindungsgemäß hergestellten Hohlfasern zeichnen sich somit vorteilhaft durch eine gesteigerte Permeabilität aus.

## Patentansprüche

1. Verfahren zur Herstellung von cellulosischen Formkörpern, in dem eine Lösung enthaltend in Aminoxiden gelöste Cellulose in einer Düse geformt wird, und die geformte Lösung nach einer Luftstrecke in ein Fällmedium geführt wird,
**dadurch gekennzeichnet, daß**
die geformte Lösung nacheinander durch mindestens zwei Fällmedien geführt wird, wobei die Fällmedien so ausgewählt werden, daß zumindest im ersten Fällmedium eine langsamere Koagulation der Cellulose gegenüber dem letzten Fällmedium erfolgt, wobei die Verweildauer in den Fällmedien mit gegenüber dem letzten Fällmedium verlangsamter Koagulation so ausgewählt wird, daß nur die äußere Schicht des im Entstehen begriffenen Formkörpers koaguliert.

2. Verfahren nach Anspruch 1,
**dadurch gekennzeichnet, daß** für die Fällmedien mit gegenüber dem letzten Fällmedium verlangsamter Koagulation ein Lösungsmittel für Aminoxide eingesetzt wird.

3. Verfahren nach Anspruch 2,
**dadurch gekennzeichnet, daß** Lösungsmittel, ausgewählt aus Alkanolen, wie Hexanol oder Heptanol oder Octanol, höherwertigen Alkoholen, wie Propandiol, Butandiol oder Glycerin, Carbonsäuren, Aminen oder anderen Stickstoffverbindungen, Elektrolytlösungen oder Mischungen davon, eingesetzt werden.

4. Verfahren nach Anspruch 3,
**dadurch gekennzeichnet, daß** als Lösungsmittel mit Wasser nicht oder nur sehr gering mischbare Alkanole eingesetzt werden.

5. Verfahren nach mindestens einem der Ansprüche 1 bis 4,
**dadurch gekennzeichnet, daß** zumindest als letztes Fällmedium ein Fällmedium, das Wasser oder eine wäßrige Aminoxidlösung enthält, eingesetzt wird.

6. Verfahren nach mindestens einem der Ansprüche 1 bis 5,
**dadurch gekennzeichnet, daß** als Aminoxid N-Methyl-Morpholin-N-Oxid (NMMNO) eingesetzt wird.

7. Verfahren nach mindestens einem der Ansprüche 1 bis 6,
**dadurch gekennzeichnet, daß** mit zwei Fällmedien gearbeitet wird.

8. Verfahren nach Anspruch 7,
**dadurch gekennzeichnet, daß** ein in Wasser unlösliches oder nur sehr gering lösliches erstes Fällmedium über dem zweiten wäßrigen Fällmedium geschichtet wird.

9. Verfahren nach Anspruch 7 oder 8,
**dadurch gekennzeichnet, daß** durch Änderung der Schichthöhe des ersten Fällmediums die Verweildauer des Formkörpers im ersten Fällmedium eingestellt wird.

10. Cellulosischer Formkörper, hergestellt durch Formen einer Lösung enthaltend in Aminoxiden gelöste Cellulose,
**dadurch gekennzeichnet, daß** der cellulosische Formkörper, im inneren Bereich einer hohen übermolekularen Ordnung sowie kleine feindisperse Poren und im äußeren Bereich einer geringen Ordnung sowie gegenüber dem inneren Bereich größere heterogene Hohlräumen aufweist.

11. Cellulosischer Formkörper nach Anspruch 10,
**dadurch gekennzeichnet, daß** dieser eine Faser, ein Film, eine Membran in Form von Flachmembran und Hohlfasermembran ist.

12. Cellulosefaser nach Anspruch 11,
**dadurch gekennzeichnet, daß** sie eine Kern-Mantel-Struktur aufweist.

## Claims

1. Method of producing cellulosic mouldings, in which a solution containing cellulose dissolved in amino-oxides is moulded in a nozzle and the moulded solution is led after an air gap into a precipitation medium, **characterised in that** the moulded solution is led in succession through at least two precipitation media, the precipitation media being so selected that at least in the first precipitation medium slower coagulation of the cellulose takes place by comparison with the last precipitation medium, the dwell time in the precipitation media with slowed down coagulation by comparison with the last precipitation medium being so selected that only the outer layer of the moulding in the process of formation coagulates.

2. Method according to claim 1, **characterised in that** a solvent for amino-oxides is used for the precipitation media with slowed-down coagulation by comparison with the last precipitation medium.

3. Method according to claim 2, **characterised in that** solvents, selected from alkanols, such as hexanol or heptanol or octanol, superior alcohols such as propanediol, butanediol or glycerine, carboxylic acids, amines or other nitrogen compounds, electrolytic solutions or mixtures thereof are used.

4. Method according to claim 3, **characterised in that** alkanols which cannot be mixed with water or can only be very slightly mixed with water are used as the solvent.

5. Method according to at least one of claims 1 to 4, **characterised in that** a precipitation medium which contains water or an aqueous amino-oxide solution is used at least as the last precipitation medium.

6. Method according to at least one of claims 1 to 5, **characterised in that** n-methyl-morpholine-N-oxide (NMMNO) is used as the amino―oxide.

7. Method according to at least one of claims 1 to 6, **characterised in that** the operation is carried out with two precipitation media.

8. Method according to claim 7, **characterised in that** a first precipitation medium which is insoluble in water or only very slightly soluble in water is layered above the second aqueous precipitation medium.

9. Method according to claim 7 or 8, **characterised in that** the dwell time of the moulding in the first precipitation medium is set by altering the layer height of the first precipitation medium.

10. Cellulosic moulding, produced by moulding a solution containing cellulose dissolved in amino-oxides, **characterised in that** the cellulosic moulding, has in the inner region a high supermolecular order as well as small, finely dispersed pores and in the outer region a low order and larger heterogeneous cavities by comparison with the inner region.

11. Cellulosic moulding according to claim 10, **characterised in that** it is a fibre, a film, a membrane in the form of a flat membrane and a hollow-fibre membrane.

12. Cellulose fibre according to claim 11, **characterised in that** it has a core - cladding structure.

## Revendications

1. Procédé de production de corps moulés cellulosiques, dans lequel on forme dans une buse une solution contenant de la cellulose dissoute dans des oxydes d'amine, et on conduit la solution formée après un trajet dans l'air dans un milieu de précipitation,
**caractérisé en ce qu'**
on conduit la solution formée successivement à travers deux milieux de précipitation, les milieux de précipitation étant choisis de manière qu'au moins dans le premier milieu de précipitation se produise une coagulation plus lente de la cellulose par rapport au dernier milieu de précipitation, le temps de séjour dans les milieux de précipitation à coagulation ralentie par rapport au dernier milieu de précipitation étant choisi de manière que seule la couche externe du corps moulé apparu en question coagule.

2. Procédé selon la revendication 1,
**caractérisé en ce qu'**
on utilise pour les milieux de précipitation à coagulation ralentie par rapport au dernier milieu de précipitation un solvant pour les oxydes d'amine.

3. Procédé selon la revendication 2,
**caractérisé en ce qu'**
on utilise des solvants choisis parmi les alcanols, comme l'hexanol ou l'heptanol voir encore l'octanol, les alcools supérieurs, comme le propane diol, le butane diol ou la glycérine, les acides carboxyliques, les amines ou d'autres composés azotés, des solutions d'électrolytes ou leurs mélanges.

4. Procédé selon la revendication 3,
**caractérisé en ce qu'**
on utilise comme solvant des alcanols non miscibles ou seulement très faiblement miscibles à l'eau.

5. Procédé selon au moins l'une des revendications 1 à 4,
**caractérisé en ce qu'**
on utilise au moins comme dernier milieu un milieu de précipitation qui contient de l'eau ou une solution aqueuse d'oxyde d'amine.

6. Procédé selon au moins l'une des revendications 1 à 5,
**caractérisé en ce qu'**
on utilise comme oxyde d'amine le N-oxyde de N-méthyl-morpholine (NMMNO).

7. Procédé selon au moins l'une des revendications 1 à 6,
**caractérisé en ce qu'**
on travaille avec deux milieux de précipitation.

8. Procédé selon la revendication 7,
**caractérisé en ce qu'**
on dépose un premier milieu de précipitation insoluble dans l'eau ou seulement très faiblement soluble dans l'eau sur le second milieu de précipitation aqueux.

9. Procédé selon la revendication 7 ou 8,
**caractérisé en ce qu'**
en modifiant la hauteur de couche du premier milieu de précipitation, on règle le temps de séjour du corps moulé dans le premier milieu de précipitation.

10. Corps moulés cellulosiques produits par formage d'une solution contenant de la cellulose dissoute dans des oxydes d'amine,
**caractérisés en ce que**
le corps moulé cellulosique présente dans sa zone interne une ordonnance supramoléculaire forte ainsi que de petits pores finement dispersés, et dans sa zone externe une ordonnance plus faible ainsi que des espaces creux hétérogènes plus grands par rapport à la zone interne.

11. Corps moulé cellulosique selon la revendication 10,
**caractérisé en ce qu'**
il s'agit d'une fibre, d'une pellicule, d'une membrane sous forme de membrane plate ou de membrane à fibres creuses.

12. Fibre cellulosique selon la revendication 11,
**caractérisée en ce qu'**
elle présente une structure noyau-manteau.
